# EUROPEAN PATENT APPLICATION

(11) **EP 3 419 142 A1**
(43) Date of publication of application: **26.12.2018**
(21) Application number: 16890641.0
(22) Date of filing: 09.11.2016
(51) Int. Cl.: H02J 7/35, H02J 7/00, H02J 9/06

(54) **POWER STORAGE SYSTEM AND POWER STORAGE METHOD**

(30) Priority: 16.02.2016 JP 2016026751
(71) Applicant: Fujikura Ltd., Tokyo 135-8512 (JP)
(72) Inventor: YAMAMOTO Kazuhiro, Sakura-shi Chiba 285-8550 (JP); OKADA Kenichi, Sakura-shi Chiba 285-8550 (JP)
(74) Representative: Lavoix
(86) International application number: PCT/JP2016/083212
(87) International publication number: WO 2017/141504

(57) **Abstract**

A power storage system comprises a power generation element that performs energy harvesting, a storage battery that is charged with a generated power of the power generation element and that supplies power to a device, a voltage detector that detects a power storage state of the storage battery, a primary battery for backup, a first switch unit provided between the primary battery and the storage battery, and a switcher comparing a detected voltage of the voltage detector with a predetermined threshold voltage, and controlling the first switch unit based on an comparison output of the detected voltage of the voltage detector and the predetermined threshold voltage, wherein the switcher turns on the first switch unit and charges the storage battery by a power supply from the primary battery when the detected voltage of the voltage detector is decreased to the predetermined threshold voltage or less.

## Description

### TECHNICAL FIELD

The present invention relates to a power storage system and a power storage method.

Priority is claimed based on Japanese Patent Application No. 2016-026751 filed in Japan on February 16, 2016, the content of which is hereby incorporated by reference.

### BACKGROUND ART

Energy harvesting technologies that accumulate energy obtained from the environment such as sunlight in a storage battery and operate a device attract attention. In the energy harvesting, electric power is often weak, so that the power supply to a device to be operated may be insufficient. In view of the above, it has been proposed to provide a primary battery for backup purposes, and to continue the operation of the device by supplying electric power from the primary battery to the device when the power supply to the device is insufficient (see, for example, Patent Document 1). When providing a supplemental primary battery, a DC/DC converter (DC voltage-DC voltage converter) is provided downstream of the primary battery so as to be applied to various primary batteries having different output voltage.

### PRIOR ART DOCUMENTS

### PATENT DOCUMENTS

[Patent Document 1] Japanese Unexamined Patent Application, First Publication No. 2010-259320

### DISCLOSURE OF INVENTION

### PROBLEMS TO BE SOLVED BY THE INVENTION

However, if the power is continuously supplied from the primary battery to the device, the power consumption of the entire power storage system is increased. That is, the DC/DC converter downstream of the primary battery has an order of several µA tο several tens of µA; however, consumes electric power. Continuing to supply power from the primary battery to the device makes the operation time of the DC/DC converter longer; therefore, the power consumption of the DC/DC converter cannot be ignored.

In view of the above-described circumstances, the present invention provides a power storage system and a power storage method capable of further reducing power consumption when a supplemental primary battery is provided.

### MEANS FOR SOLVING THE PROBLEMS

A first aspect of the present invention is a power storage system including a power generation element that is configured to perform energy harvesting, a storage battery that is charged with a generated power of the power generation element and that is configured to supply power to a device, a voltage detector that is configured to detect a power storage state of the storage battery, a primary battery for backup, a first switch unit provided between the primary battery and the storage battery, and a switcher comparing a detected voltage of the voltage detector with a predetermined threshold voltage, and controlling the first switch unit according to a comparison output of the detected voltage of the voltage detector and the predetermined threshold voltage, in which the switcher is configured to turn on the first switch unit and charge the storage battery by a power supply from the primary battery when the detected voltage of the voltage detector is decreased to the predetermined threshold voltage or less.

A second aspect of the present invention is the power storage system according to the first aspect described above, in which the switcher includes, as the predetermined threshold voltage, a first threshold voltage to be compared with a voltage value when the detection voltage of the voltage detector is increased, and a second threshold voltage to be compared with a voltage value when the detection voltage of the voltage detector is decreased, the first switch unit is set to an ON state when the detected voltage of the voltage detector is decreased to the second threshold or less, and the first switch unit is set to an OFF state when the detected voltage of the voltage detector is increased to the first threshold or more.

A third aspect of the present invention is the power storage system according to the first or second aspect described above, including a DC/DC converter configured to convert an output voltage of the primary battery to a predetermined voltage and arranged at downstream of the primary battery, in which the switcher is configured to set the DC/DC converter in a non-operation state while the first switch unit is set to an OFF state.

Afourth aspect of the present invention is the power storage system according to any one of the first to third aspects described above, in which a second switch unit arranged between the primary battery and a power supply line to the device, and the switcher is configured to set the second switch unit to an OFF state while the first switch unit is in an ON state.

A fifth aspect of the present invention is a power storage method in a power storage system, in which the power storage system comprises a power generation element that is configured to perform energy harvesting, a storage battery that is charged with power generated by the power generation element and that is configured to supply power to the device, and a primary battery for backup, the method including detecting a storage battery of the storage battery, comparing a detected voltage of the storage voltage of the storage battery with a predetermined threshold voltage, and when the detected voltage of the storage voltage of the storage battery is decreased to the predetermined threshold voltage or less, the storage battery is charged with power from the primary battery.

### EFFECTS OF THE INVENTION

According to the aspect of the present invention described above, the operation time of the DC/DC converter downstream of the supplemental primary battery can be shortened, and the power consumption of the entire power storage system can be further reduced.

### BRIEF DESCRIPTION OF THE DRAWINGS

FIG. 1 is a configuration diagram showing a configuration example of a power storage system according to the first embodiment.
FIG. 2 is a diagram showing an operation example of each portion in the power storage system according to the first embodiment.
FIG. 3 is a flowchart showing a processing procedure in the power storage system according to the first embodiment.
FIG. 4 is a configuration diagram showing a configuration example of a power storage system according to the second embodiment.

### DESCRIPTION OF THE PREFERRED EMBODIMENTS

Hereinafter, embodiments of the present invention will be described with reference to the drawings.

### First Embodiment

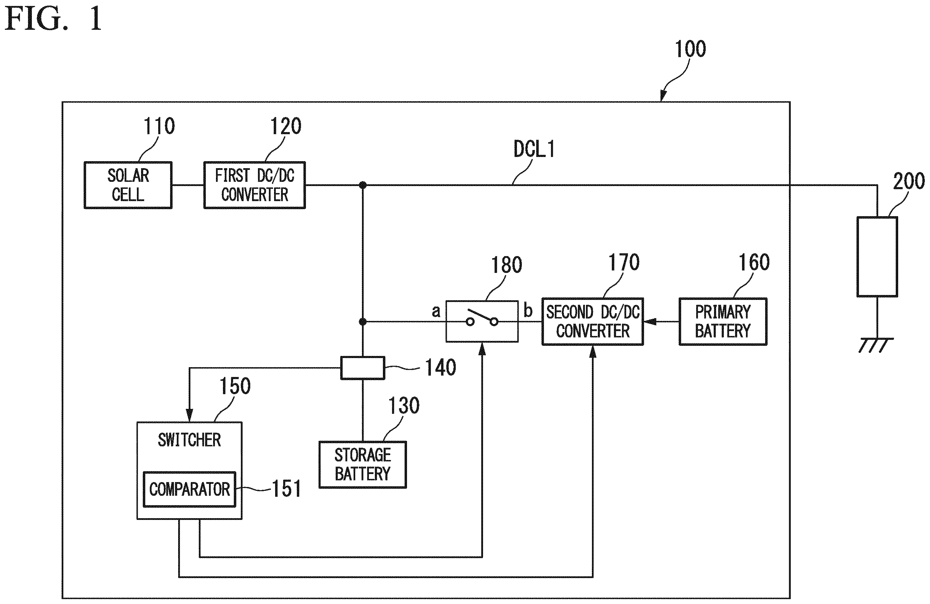

FIG. 1 is a configuration diagram showing a configuration example of a power storage system 100 according to the present embodiment. As shown in FIG. 1, the power storage system 100 includes a solar battery 110 using an energy harvesting element, a first DC/DC converter (DC voltage-DC voltage conversion device) 120, a storage battery 130, a voltage detector 140, a switcher 150, a primary battery 160, a second DC/DC converter 170, and a first switch unit 180.

The solar battery 110 is configured so that a plurality of solar batteries arranged on the light receiving surface side are connected in series to obtain a predetermined output voltage. The output side of the solar battery 110 is connected to the input side of the first DC/DC converter 120.

The first DC/DC converter 120 converts the voltage input from the solar battery 110 into a voltage corresponding to the supply voltage to the device 200. An output side of the first DC/DC converter 120 is connected to a power supply line DCL1 to the device 200 which is load.

The storage battery 130 is a capacitor having large capacity, which is for example, a lithium ion capacitor (LIC) of 40 farad (F). The storage battery 130 is connected to the power supply line DCL1 via the voltage detector 140 and also connected to the terminal a of the first switch unit 180.

The voltage detector 140 is configured using, for example, a resistance voltage dividing circuit, and detects the storage voltage of the storage battery 130. The detected voltage from the voltage detector 140 is supplied to the switcher 150.

The switcher 150 determines the storage state of the storage battery 130 from the comparison output with the predetermined threshold voltage according to the detected voltage of the voltage detector 140, and according to the determination result, controls the first switch unit 180 and the second DC/DC converter 170. The switcher 150 includes a comparator 151. In the comparator 151, a first threshold voltage Ref1 and a second threshold voltage Ref2 are provided. The first threshold voltage Ref1 is a threshold value to be compared with the voltage value when the detected voltage of the voltage detector 140 rises, and for example, is 2.7 V. The second threshold voltage Ref2 is a threshold value to be compared with the voltage value when the detected voltage of the voltage detector 140 is decreased, and for example, is 2.5 V. The switcher 150 controls the first switch unit 180 and the second DC/DC converter 170 with the hysteresis characteristics of the first threshold voltage Ref1 and the second threshold voltage Ref2 from the comparison output of the comparator 151.

The primary battery 160 is a supplemental power supply. The primary battery 160 is connected to the input side of the second DC/DC converter 170.

The second DC/DC converter 170 converts the voltage of the primary battery 160 into a voltage corresponding to the supply voltage so that various types of primary batteries 160 having different output voltages can be applied. An output side of the second DC/DC converter 170 is connected to a terminal b of the first switch unit 180.

The first switch unit 180 turns on or off between the output side of the second DC/DC converter 170 and the storage battery 130. The terminal b of the first switch unit 180 is connected to the storage battery 130 via the voltage detector 140 and is also connected to the power supply line DCL1.

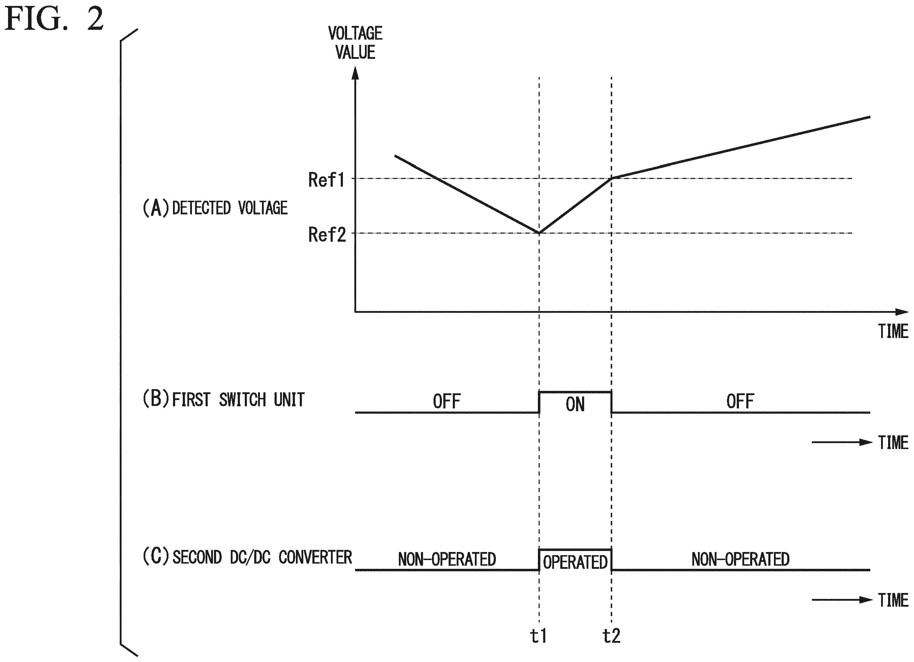

FIG. 2 is a diagram showing an operation example of each portion in the power storage system 100 according to the present embodiment. Part (A) of FIG. 2 shows a change in the detected voltage of the voltage detector 140, the horizontal axis shows time, and the vertical axis shows the voltage value. Part (B) of FIG. 2 shows the state of the first switch unit 180 with time as the horizontal axis. Part (C) of FIG. 2 shows the operation state of the second DC/DC converter 170 with time as the horizontal axis.

As shown in FIG. 1, in the power storage system 100 according to the present embodiment, the storage voltage of the storage battery 130 is detected by the voltage detector 140. The switcher 150 controls the first switch unit 180 and the second DC/DC converter 170 according to the detected voltage of the voltage detector 140.

In the normal state, as shown in FIG. 2, the detected voltage of the voltage detector 140 is larger than the first threshold voltage Ref1 and the second threshold voltage Ref2. At this stage, the switcher 150 switches the first switch unit 180 to an OFF state and the second DC/DC converter 170 is set in a non-operation state. In the meantime, the storage battery 130 is charged with the power generated by the solar battery 110, and power from the storage battery 130 is supplied to the device 200 through the power supply line DCL1. Note that the normal state has a voltage value at which power generation is being performed by the solar battery 110 or not being performed and power can be supplied to the device 200.

When the detected voltage of the voltage detector 140 is decreased to the second threshold voltage Ref2 or less due to a decrease in the amount of power generation or the like, the switcher 150 sets the first switch unit 180 to the ON state as shown in FIG. 2 and sets the second DC/DC converter 170 to the operation state. When the first switch unit 180 is set to the ON state, power is supplied from the primary battery 160 to the storage battery 130 and the device 200 via the second DC/DC converter 170, the first switch unit 180, and the voltage detector 140 and the storage battery 130 is charged.

In FIG. 2, at time t1, the detected voltage of the voltage detector 140 is decreased to the second threshold voltage Ref2 or less. At this time, as shown in Part (B) of FIG. 2, the switcher 150 switches the first switch unit 180 to the on state, and switches the second DC/DC converter 170 to the operation state as shown in Part (C) of FIG. 2. After time t1, the storage battery 130 is charged by the primary battery 160. As a result, as shown in Part (A) of FIG. 2, the detected voltage of the voltage detector 140 is increased.

When the detected voltage of the voltage detector 140 is increased to the first threshold voltage Ref1 or more, the switcher 150 determines that the storage amount of the storage battery 130 is recovered and sets the first switch unit 180 to the OFF state and the second DC/DC converter 170 to the non-operation state. Therefore, the detected voltage of the voltage detector 140 returns to the normal state.

In FIG. 2, at time t2, the detected voltage of the voltage detector 140 is increased to the first threshold voltage Ref1 or more. At this time, as shown in Part (B) of FIG. 2, the switcher 150 switches the first switch unit 180 to the OFF state and switches the second DC/DC converter 170 to the non-operation state as shown in Part (C) of FIG. 2. If the power generation amount has recovered from time t1 to time t2, the normal state is restored at time t2 or after.

If the power generation amount has not recovered from time t1 to time t2, the storage amount of the storage battery 130 becomes insufficient again. However, in the present embodiment, the switcher 150 controls the first switch unit 180 and the second DC/DC converter 170 with hysteresis characteristics of the first threshold voltage Ref1 and the second threshold voltage Ref2. Therefore, even if the storage voltage of the storage battery 130 is decreased to the first threshold voltage Ref1 or less, the states of the first switch unit 180 and the second DC/DC converter 170 are not immediately switched. The first switch unit 180 and the second DC/DC converter 170 are switched after waiting for the detected voltage of the voltage detector 140 to be decreased to the second threshold voltage Ref2 or less. In this manner, since the switcher 150 has hysteresis characteristics, stable operation can be maintained.

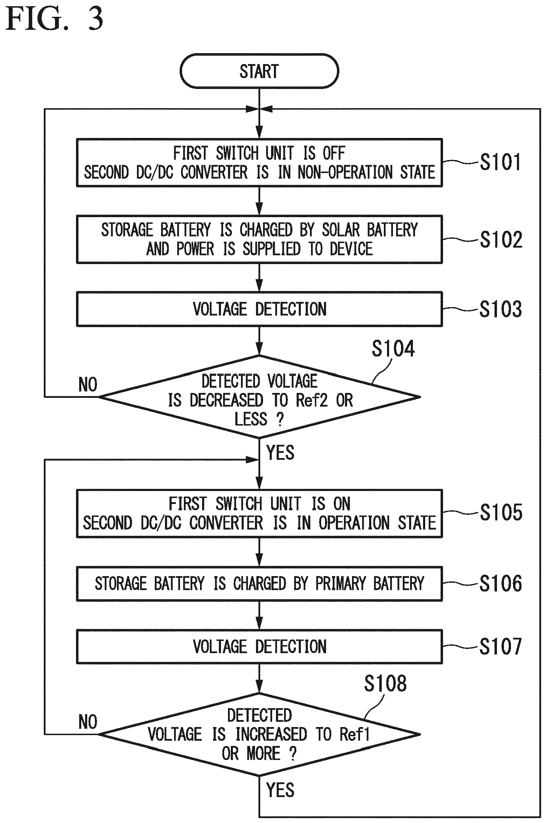

FIG. 3 is a flowchart showing a processing procedure in the power storage system 100 according to the present embodiment.

(Step S101) In the initial state, the switcher 150 sets the first switch unit 180 to an OFF state and sets the second DC/DC converter 170 to a non-operation state.

(Step S102) The power from the solar battery 110 is supplied to the storage battery 130, the storage battery 130 is charged, and the power from the storage battery 130 is supplied to the device 200.

(Step S103) The voltage detector 140 detects the voltage of the storage battery 130 and outputs the detected voltage to the switcher 150.

(Step S104) The switcher 150 determines whether or not the detected voltage of the voltage detector 140 is decreased to the second threshold voltage Ref2 or less. When it is determined that the detected voltage of the voltage detector 140 is decreased to the second threshold voltage Ref2 or less (Step S105; YES), the switcher 150 proceeds to the process of Step S105. When it is determined that the detected voltage of the voltage detector 140 has not decreased to the second threshold voltage Ref2 or less (Step S105; NO), the switcher 150 returns the process to Step S101.

(Step S105) The switcher 150 switches the first switch unit 180 to an ON state and sets the second DC/DC converter 170 to the operation state.

(Step S106) The storage battery 130 is charged by the power supply from the primary battery 160.

(Step S107) The voltage detector 140 detects the voltage of the storage battery 130 and outputs the detected voltage to the switcher 150.

(Step S108) The switcher 150 determines whether or not the detected voltage of the voltage detector 140 is increased to the first threshold voltage Ref1 or more. When the switcher 150 determines that the detected voltage from the voltage detector 140 is increased to the first threshold voltage Ref1 or more (Step S108: YES), the switcher 150 returns the process to Step S101. When it is determined that the detected voltage has not increased to the first threshold voltage Ref1 or more (Step S108: NO), the switcher 150 returns the process to Step S105.

As described above, in the present embodiment, in the normal state, the switcher 150 sets the first switch unit 180 to the OFF state and sets the second DC/DC converter 170 to the non-operation state. When detecting the shortage of the storage amount of the storage battery 130 from the detected voltage of the voltage detector 140, the switcher 150 sets the first switch unit 180 to the ON state and sets the second DC/DC converter 170 to the operation state. This allows the primary battery 160 to charge the storage battery 130 to a predetermined storage amount while continuing the power supply to the device 200. In the present embodiment, the second DC/DC converter 170 is set to the operation state by the switcher 150 only while the storage battery 130 is increased to the predetermined storage amount by the primary battery 160. Therefore, the power consumption in the second DC/DC converter 170 can be reduced. Therefore, it is possible to reduce the power consumption of the entire power storage system 100.

In the present embodiment, since there is a path supplying power from the primary battery 160 to the power supply line DCL1 via the second DC/DC converter 170 and the first switch unit 180, until the state of charge of the storage battery 130 is recovered, the power supply to the device 200 can be continued. At this time, power amount of the power used for power storage from the primary battery 160 to the storage battery 130 and the power supplied from the primary battery 160 to the device 200 may be controlled.

### Second Embodiment

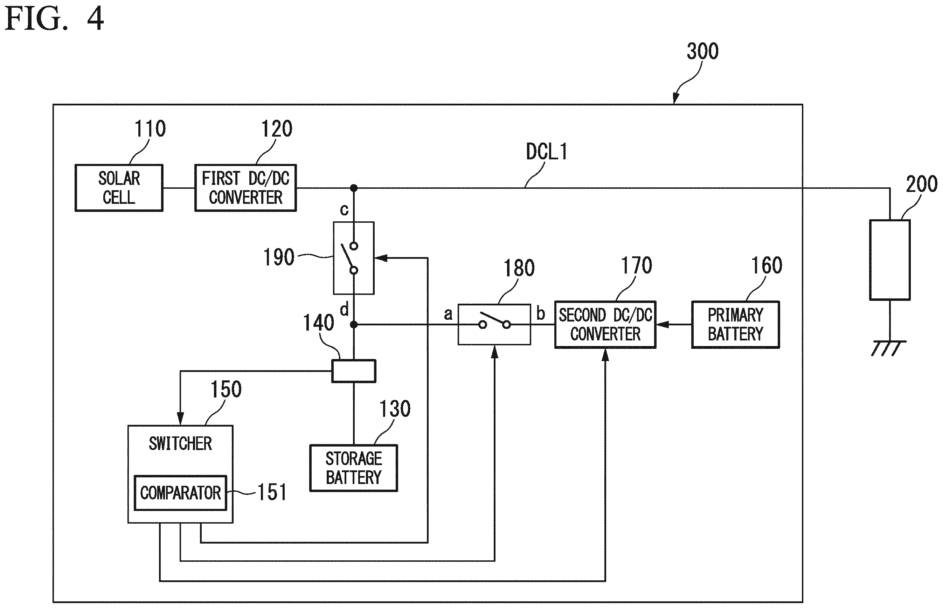

FIG. 4 is a configuration diagram showing a configuration example of a power storage system 300 according to the present embodiment. In FIG. 4, portions similar to those of the first embodiment are denoted by the same reference numerals, and a description thereof is omitted.

As shown in FIG. 4, the power storage system 300 of the present embodiment further includes a second switch unit 190. A terminal c of the second switch unit 190 is connected to the power supply line DCL1. A terminal d of the second switch unit 190 is connected to the terminal a of the first switch unit 180 and is connected to the storage battery 130 via the voltage detector 140. The second switch unit 190 is controlled by the switcher 150.

As in the first embodiment, in the normal state, the switcher 150 sets the first switch unit 180 to the OFF state and sets the second DC/DC converter 170 to the non-operation state. Furthermore, in the present embodiment, in the normal state, the switcher 150 sets the second switch unit 190 in the ON state.

When the detected voltage of the voltage detector 140 is decreased to the second threshold voltage Ref2 or less, the switcher 150 sets the first switch unit 180 to the ON state and sets the second DC/DC converter 170 to the operation state. Furthermore, in the present embodiment, when the detected voltage of the voltage detector 140 is decreased to the second threshold voltage Ref2 or less, the switcher 150 sets the second switch unit 190 to the OFF state. When the first switch unit 180 is set to the ON state, power is supplied from the primary battery 160 to the storage battery 130 via the second DC/DC converter 170, the first switch unit 180, and the voltage detector 140, and the storage battery 130 is charged. At this time, since the second switch unit 190 is in the OFF state, the power supply from the primary battery 160 to the device 200 is stopped.

In the present embodiment, since the power from the primary battery 160 is used only for charging the storage battery 130, it is possible to charge the storage battery 130 to a predetermined storage amount in a short time. Therefore, the operation time of the second DC/DC converter 170 can be shortened, and the power consumption in the second DC/DC converter 170 can be reduced.

Note that the power storage system 100 (or 300) described in the first embodiment or the first embodiment is not limited only to the illustrated example described above, and various modifications can be added within the scope not deviating from the gist of the present invention.

For example, in the example described above, an example of the solar battery 110 using the energy harvesting element as the power generation element is shown; however, the present invention is not limited thereto. The power generating element may be a power generating element capable of performing energy harvesting. Here, the energy harvesting other than light refers to the power generation by, for example, heat, vibration, wind power, radio waves and the like.

Furthermore, the power storage system 100 (or 300) can be used as a power source for opening and closing a door or as a power source for an electric switch. When the power storage system is used as a power source and the like for opening and closing a door, the power consumption for the power source opening and closing the door and the power source of the electric switch differs depending on the installation environment and the usage situation. Therefore, even if the light hits the solar battery 110, the balance of the power generation amount and the power consumption may be negative. In such a case, the power storage system 100 (or 300) can be suitably used.

### DESCRIPTION OF THE REFERENCE SYMBOLS

- 100, 300:: power storage system
- 110:: solar battery
- 120:: first DC/DC converter
- 130:: storage battery
- 140:: voltage detector
- 150:: switcher
- 151:: comparator
- 160:: primary battery
- 170:: second DC/DC converter
- 180:: first switch unit
- 190:: second switch unit

## Claims

1. A power storage system comprising:
a power generation element that is configured to perform energy harvesting;
a storage battery that is charged with a generated power of the power generation element and that is configured to supply power to a device;
a voltage detector that is configured to detect a power storage state of the storage battery;
a primary battery for backup;
a first switch unit provided between the primary battery and the storage battery; and
a switcher comparing a detected voltage of the voltage detector with a predetermined threshold voltage, and controlling the first switch unit according to a comparison output of the detected voltage of the voltage detector and the predetermined threshold voltage, wherein the switcher is configured to turn on the first switch unit and charge the storage battery by a power supply from the primary battery when the detected voltage of the voltage detector is decreased to the predetermined threshold voltage or less.

2. The power storage system according to claim 1, wherein:
the switcher comprises, as the predetermined threshold voltage, a first threshold voltage to be compared with a voltage value when the detection voltage of the voltage detector is increased, and a second threshold voltage to be compared with a voltage value when the detection voltage of the voltage detector is decreased;
the first switch unit is set to an ON state when the detected voltage of the voltage detector is decreased to the second threshold or less; and
the first switch unit is set to an OFF state when the detected voltage of the voltage detector is increased to the first threshold or more.

3. The power storage system according to claim 1 or 2, comprising
a DC/DC converter configured to convert an output voltage of the primary battery to a predetermined voltage and arranged at downstream of the primary battery, wherein the switcher is configured to set the DC/DC converter in a non-operation state while the first switch unit is set to an OFF state.

4. The power storage system according to any one of claims 1-3, comprises
a second switch unit arranged between the primary battery and a power supply line to the device, and
the switcher is configured to set the second switch unit to an OFF state while the first switch unit is in an ON state.

5. A power storage method in a power storage system,
wherein the power storage system comprises a power generation element that is configured to perform energy harvesting, a storage battery that is charged with power generated by the power generation element and that is configured to supply power to the device, and a primary battery for backup,
the method comprising:
detecting a storage battery of the storage battery;
comparing a detected voltage of the storage voltage of the storage battery with a predetermined threshold voltage; and
when the detected voltage of the storage voltage of the storage battery is decreased to the predetermined threshold voltage or less, the storage battery is charged with power from the primary battery.
